# EUROPÄISCHE PATENTSCHRIFT

(11) **EP 2 702 288 B1**
(45) Veröffentlichungstag und Bekanntmachung des Hinweises auf die Patenterteilung: **14.06.2017**
(21) Anmeldenummer: 12727776.2
(22) Anmeldetag: 04.04.2012
(51) Int. Cl.: F16D 13/38, F16D 13/70

(54) **KUPPLUNGSDECKEL**
CLUTCH COVER
COUVERCLE D'EMBRAYAGE

(30) Priorität: 28.04.2011 DE 102011018889
(43) Veröffentlichungstag der Anmeldung: 05.03.2014
(73) Patentinhaber: Schaeffler Technologies AG & Co. KG, 91074 Herzogenaurach (DE)
(72) Erfinder: DECKER, Florian, 77815 Bühl (DE); KOTLJAROW, Valeri, 77743 Schutterzell (DE)
(86) Internationale Anmeldenummer: PCT/DE2012/000357
(87) Internationale Veröffentlichungsnummer: WO 2012/146224

(56) Entgegenhaltungen:
- GB-A- 1 482 768
- GB-A- 2 176 549
- US-A- 4 616 741

## Beschreibung

Die Erfindung betrifft einen Kupplungsdeckel gemäß dem Oberbegriff des Patentanspruchs 1. Insbesondere betrifft die Erfindung einen Kupplungsdeckel, mit dessen Hilfe beispielsweise eine Anpressplatte und/oder eine Gegenplatte einer Reibungskupplung für einen Antriebsstrang eines Kraftfahrzeugs zumindest teilweise abgedeckt werden kann.

Eine Reibungskupplung weist eine mit einem Kupplungsgehäuse fest verbundene Gegenplatte und eine axial bewegbare Anpressplatte zum Verpressen einer Kupplungsscheibe zwischen der Anpressplatte und der Gegenplatte auf. Das Kupplungsgehäuse weist einen Kupplungsdeckel auf, der die Anpressplatte und die Gegenplatte zumindest teilweise abdeckt. Der Kupplungsdeckel kann auch ein Betätigungselement, beispielsweise eine Hebelfeder, lagern, mit dessen Hilfe die Anpressplatte auf die Gegenplatte zu gedrückt werden kann.

Es besteht ein ständiges Bedürfnis Reibungskupplungen kostengünstig herstellen zu können.

Ein Kupplungsdeckel, der auf den Oberbegriff des Patentanspruchs 1 lesbar ist, ist aus der GB 2 176 549 A oder der GB 1 482 768 A bekannt.

Es ist die Aufgabe der Erfindung Maßnahmen anzugeben, mit deren Hilfe eine kostengünstige Herstellung einer Reibungskupplung ermöglicht ist.

Die Lösung der Aufgabe erfolgt erfindungsgemäß durch einen Kupplungsdeckel mit den Merkmalen des Anspruchs 1. Bevorzugte Ausgestaltungen der Erfindung sind in den Unteransprüchen angegeben.

Erfindungsgemäß ist ein Kupplungsdeckel für eine Reibungskupplung, insbesondere für einen Antriebsstrang eines Kraftfahrzeugs, vorgesehen mit mehreren ringförmig miteinander verbundenen Deckelsegmenten und einem radial außen an den Deckelsegmenten anliegbaren Haltering.

Da der Kupplungsdeckel nicht einstückig sondern mehrstückig aus mehreren Deckelsegmenten zusammengesetzt ist, ist es möglich den Kupplungsdeckel aus kostengünstigeren kleineren Bauteilen aufzubauen, so dass eine Reibungskupplung mit einem derartigen Kupplungsdeckel kostengünstig hergestellt werden kann. Vorzugsweise sind die Deckelsegmente gleichartig, insbesondere identisch, ausgestaltet, so dass für den Kupplungsdeckel viele Gleichteile verwendet werden können. Besonders bevorzugt sind die Deckelsegmente aus einem Blech, insbesondere durch Stanzen und spanloses Umformen, herstellbar. Durch den Haltering kann die Steifigkeit des durch die Deckelsegmente segmentierten Kupplungsdeckels erhöht werden. Insbesondere unter Fliehkrafteinfluss kann ein Aufweiten des segmentierten Kupplungsdeckels vermieden oder zumindest begrenzt werden. Die Berstfestigkeit des Kupplungsdeckels ist erhöht. Zudem ist eine erhöhte Formfestigkeit für den Kupplungsdeckel gegeben. Durch den Haltering kann für die Deckelsegmente eine vergleichsweise geringe Wandstärke vorgesehen sein, so dass die Materialkosten reduziert sind. Der Haltering kann insbesondere als ein geschlossener Drahtring ausgestaltet sein. Vorzugsweise ist der Haltering aus einem anderen Material als die Deckelsegmente hergestellt. Besonders bevorzugt weist der Haltering eine höhere Festigkeit als die Deckelsegmente auf. Der Haltering ist beispielsweise aus einem legierten und/oder gehärteten Stahl hergestellt. Der Haltering kann an den Deckelsegmenten zentriert sein. Nach einer Montage des Kupplungsdeckels mit einem Kupplungsgehäuse und/oder mit einer Gegenplatte der Reibungskupplung kann der Kupplungsdeckel und der Haltering verspannt werden, wodurch der Haltering verliersicher von den Deckelsegmenten aufgenommen sein kann. Erfindungsgemäß weist das Deckelsegment eine nach radial außen weisende Nase zur radialen Anlage an dem Haltering auf. Der Haltering kann dadurch an definierten Stellen an den Deckelsegmenten anliegen. Insbesondere enden die Nasen sämtlicher Deckelsegmente auf einem gemeinsamen Radius, so dass der Haltering zentriert an den Deckelsegmenten anliegen kann. Das jeweilige Deckelsegment kann eine einzige Nase oder mehrere, beispielsweise zwei oder drei, Nasen aufweisen. Vorzugsweise weist das jeweilige Deckelsegment genau eine Nase auf, die in Umfangsrichtung vorzugsweise im Wesentlichen mittig zum Deckelsegment angeordnet ist.

Vorzugsweise weist das Deckelsegment einen ersten Axialanschlag zur axialen Anlage an dem Haltering in einer ersten axialen Richtung und einen zweiten Axialanschlag zur axialen Anlage an dem Haltering in einer der ersten axialen Richtung entgegengesetzten zweiten axialen Richtung auf. Das jeweilige Deckelsegment und damit der Kupplungsdeckel ist dadurch in beiden axialen Richtungen durch den Haltering in der Bewegung begrenzt. Der Kupplungsdeckel ist dadurch verwindungssteif und beständig gegen Torsion. Eine partielle elastische Verformung des Kupplungsdeckels bei einer Betätigung der Reibungskupplung ist dadurch vermieden, so dass die Kupplungsübersetzung im Betrieb der Reibungskupplung konstant bleibt und der Wirkungsgrad der Reibungskupplung nicht signifikant abnimmt. Ein Abhubverlust ist vermieden. Ferner ist der Anpresskraftverlauf vergleichmäßigt. Dadurch kann ein erhöhter Gesamtwirkungsgrad für die Reibungskupplung erreicht werden. Insbesondere wird durch die Axialanschläge eine tordierende Wechselbelastung der Deckelsegmente vermieden, wodurch sich eine erhöhte Dauerfestigkeit der Deckelsegmente ergibt. Besonders bevorzugt liegen der erste Axialanschlag und/oder der zweite Axialanschlag an dem Haltering an, so dass allenfalls ein besonders geringes axiales Spiel gegeben ist. Insbesondere liegen der erste Axialanschlag und/oder der zweite Axialanschlag mit einer Federkraft an dem Haltering an.

Besonders bevorzugt weist das Deckelsegment einen nach radial außen geöffneten Aufnahmeschlitz zur Aufnahme des Halterings auf, wobei der Aufnahmeschlitz den ersten Axialanschlag und den zweiten Axialanschlag ausbildet, wobei insbesondere der Aufnahmeschlitz im Wesentlichen in tangentialer Richtung ausgerichtet ist. Das Deckesegment kann durch den Aufnahmeschlitz aufeinander zu gerichtete Seitenflächen aufweisen, die den Aufnahmeschlitz begrenzen sowie den ersten Axialanschlag und den zweiten Axialanschlag ausbilden. Der Aufnahmeschlitz und der Haltering können insbesondere eine Spielpassung, beispielsweise H7/h6 oder H8/h9 gemäß DIN 7157, ausbilden. Der Haltering kann von radial außen in den Aufnahmeschlitz eingesetzt werden. Hierbei ist es nicht erforderlich, dass der Haltering rechtwinkelig durch den Aufnahmeschlitz verläuft. Vorzugsweise verläuft der Haltering in Umfangsrichtung während der Aufnahmeschlitz in tangentialer Richtung verläuft. Dadurch kann die Kontaktfläche zwischen dem Haltering und dem Deckelsegment vergrößert werden, wodurch sich die Steifigkeit gegen Torsion erhöht.

Insbesondere sind die Deckelsegmente jeweils im Wesentlichen tangential ausgerichtet. Die Deckelsegmente brauchen nicht gebogen ausgeführt sein, so dass die Herstellung vereinfacht ist. Insbesondere lässt sich durch die tangentiale Ausrichtung der Deckelsegmente besonders einfach ein tangential ausgerichteter Aufnahmeschlitz ausbilden, indem beispielsweise der Aufnahmeschlitz bei einem Ausstanzen des Deckelsegments aus einem Metallblech bereits vorgesehen wird.

Vorzugsweise weist das Deckelsegment zwei in Umfangsrichtung entgegengesetzte Aufnahmeschlitze auf. Das Deckelsegment kann insbesondere an in Umfangsrichtung entgegengesetzten Seiten jeweils einen Aufnahmeschlitz aufweisen. Durch die beiden zueinander beabstandeten Aufnahmeschlitze kann die Torsionssteifigkeit erhöht sein.

Besonders bevorzugt weist das Deckelsegment ein Führungselement zur axialen Führung einer axial bewegbaren Anpressplatte auf. Die Anpressplatte kann dadurch axial beweglich von dem Kupplungsdeckel zentriert werden. Insbesondere kann das Deckelsegment in axialer Richtung einen Anschlag für die Anpressplatte ausbilden, so dass beispielsweise die Anpressplatte zwischen dem Kupplungsdeckel und der Gegenplatte verliersicher aufgenommen ist.

Insbesondere sind die Deckelsegmente begrenzt gelenkig miteinander verbunden, wobei die Deckelsegmente insbesondere formschlüssig mit Spiel miteinander verbunden sind. Die begrenzte Bewegbarkeit der Deckelsegmente relativ zueinander erleichtert es den Haltering zu montieren. Nach der Montage des Halterings mit dem Kupplungsdeckel können die Deckelsegmente unbeweglich montiert, insbesondere fixiert, werden und dadurch den Haltering verspannen.

Vorzugsweise liegt der Haltering mit einer Vorspannung in radialer Richtung an den Deckelsegmenten an. Ein Aufweiten des Kupplungsdeckels unter Fliehkrafteinfluss wird dadurch reduziert. Eine Relativbewegung des Halterings relativ zu dem Kupplungsdeckel kann reibschlüssig vermieden werden.

Insbesondere ist zwischen zwei in Umfangsrichtung benachbarten Deckelsegmenten auf einer axialen Höhe, auf welcher der Haltering angeordnet ist, eine in axialer Richtung geöffnete Aussparung ausgebildet. Dies erleichtert es den Haltering mit einem Werkzeug aufzuweiten und auf die miteinander verbundenen Deckelsegmente aufzusetzen. Ansätze des Werkzeugs, die den Haltering von radial innen aufweiten, können durch die Aussparung hindurchbewegt werden, so dass das Werkzeug während der Montage des Halterings nicht an dem Kupplungsdeckel anschlagen kann.

In einer bevorzugten Ausführungsform bilden zwei benachbarte miteinander verbundene Deckelsegmente gemeinsam einen Befestigungstunnel zum Hindurchführen eines Befestigungsmittels, insbesondere Schraube, zur Verbindung des Kupplungsdeckels mit einer Gegenplatte der Reibungskupplung aus. Durch den mit Hilfe der Deckelsegmente ausgebildeten Befestigungstunnel ist es möglich mit Hilfe nur eines Befestigungsmittels jeweils zwei Deckelsegmente mit der Gegenplatte zu befestigen. Hierzu ist es nicht erforderlich Bauraum in radialer Richtung vorzusehen. Die Befestigung des Kupplungsdeckels mit der Gegenplatte kann im Wesentlichen ohne zusätzlichen Bauraumbedarf erfolgen. Insbesondere kann eine axiale Befestigungsrichtung vorgesehen sein, so dass das Befestigungsmittel einer Aufweitung des Kupplungsdeckels nach radial außen unter Fliehkrafteinfluss einen Widerstand entgegensetzt. Der Kupplungsdeckel kann durch das Befestigungsmittel zusätzlich versteift werden, wodurch für die Deckelsegmente eine vergleichsweise geringe Wandstärke vorgesehen sein kann, so dass die Materialkosten reduziert sind. Zudem kann die Berstfestigkeit des Kupplungsdeckels erhöht sein. Ferner kann für den Kupplungsdeckel eine erhöhte Formfestigkeit gegeben sein.

Der Befestigungstunnel kann im Vergleich zum übrigen Deckelsegment eine geringere axiale Erstreckung aufweisen, so dass das Befestigungsmittel, insbesondere ein Schraubenkopf einer Schraube, nicht in axialer Richtung von dem übrigen Kupplungsdeckel herausragt. An der zur Gegenplatte weisenden Seite kann der Befestigungstunnel bündig mit den Deckelsegmenten abschließen, so dass der Befestigungstunnel im montierten Zustand an der Gegenplatte insbesondere im Wesentlichen spaltlos anliegen kann. Der Befestigungstunnel kann mit dem designierten Befestigungsmittel eine Spielpassung oder eine Presspassung ausbilden. Beispielsweise kann in den Befestigungstunnel ein in die Gegenplatte hineingepresster Passstift eingepresst sein oder eine mit der Gegenplatte verschraubte Schraube mit Spiel durch den Befestigungstunnel geführt sein.

Insbesondere sind benachbarte Deckelsegmente formschlüssig miteinander verbunden, wobei benachbarte Deckelsegmente insbesondere beispielsweise durch Nietpressen miteinander verpresst sind. Die Deckelsegmente können insbesondere durch eine im Wesentlichen axiale Bewegung ineinander gesteckt werden und danach mit Hilfe des Befestigungsmittels und/oder mit Hilfe eines Verpressens, insbesondere Verstemmen, fixiert werden. Dies ergibt einen einfach und kostengünstig herzustellenden segmentierten Kupplungsdeckel, der auch unter Fliehkrafteinfluss stabil und formbeständig ist.

Vorzugsweise weist das Deckelsegment an einer in Umfangsrichtung ersten Seite eine erste Segmentleiste zur teilweisen Ausbildung des Befestigungstunnels und an einer zu der ersten Seite in Umfangsrichtung entgegengesetzten zweiten Seite eine zweite Segmentleiste zur teilweisen Ausbildung des Befestigungstunnels auf, wobei die erste Segmentleiste und die zweite Segmentleiste von zwei benachbarten Deckelsegmenten den Befestigungstunnel ausbilden. Die jeweilige Segmentleiste kann vom übrigen Deckelsegment im Wesentlichen insbesondere in tangentialer Richtung und/oder in Umfangsrichtung abstehen. Durch die aufeinander abgestimmte Ausformung der jeweiligen Segmentleisten kann der Befestigungstunnel zweistückig zusammengesetzt sein. Dies ermöglicht eine einfache und leicht herzustellende Formgestaltung der Deckelsegmente.

Besonders bevorzugt bildet die erste Segmentleiste einen radial äußeren Rand des Befestigungstunnels aus, wobei die zweite Segmentleiste einen radial inneren Rand des Befestigungstunnels ausbildet. Dadurch ist es insbesondere möglich den Befestigungstunnel im Wesentlichen zylindrisch auszugestalten ohne für die Deckelsegmente komplizierte Geometrien vorzusehen. Beispielsweise können die Segmentleisten jeweils eine halbkreisförmige Wand ausbilden, die sich im zusammengesetzten Zustand zweier benachbarter Deckelsegmente zu dem Befestigungstunnel ergänzen.

Insbesondere weisen die erste Segmentleiste und die zweite Segmentleiste formschlüssig ineinander eingreifende Halteelemente, insbesondere im Wesentlichen U-förmige Halteschlitze, auf. Die Halteelemente können sich insbesondere im Wesentlichen kreuzförmig umgreifen, indem die jeweiligen Segmentleisten sich im Bereich der Halteelemente im Wesentlichen rechtwinkelig schneiden. Besonders bevorzugt bilden die Segmentleisten ein erstes Paar Haltelemente und ein zweites Paar Halteelemente aus, die insbesondere an gegenüberliegenden Seiten des Befestigungstunnels vorgesehen sind. Die Paare an Halteelementen sind insbesondere in tangentialer Richtung und/oder in Umfangsrichtung gegenüberliegend angeordnet. Benachbarte Deckelsegmente können dadurch besonders stabil und mit einem besonders geringen Ausmaß an relativer Beweglichkeit zueinander ineinander eingesetzt werden, um die Deckelsegment miteinander zu verbinden. Insbesondere ist zur Verbindung der Deckelsegmente ein axial wirkendes Werkzeug, insbesondere ein axiales Nietstempelwerkzeug, ausreichend, so dass ein radial wirkendes Schiebewerkzeug vermieden werden kann. Dadurch lassen sich die Werkzeug- und Fertigungskosten bei der Serienproduktion des Kupplungsdeckels reduzieren. Insbesondere können die Halteelemente gleichzeitig axial von oben und axial von unten verprägt werden, so dass die Taktzeiten bei der Fertigung des Kupplungsdeckels reduziert werden können.

Vorzugsweise sind die Haltelemente, insbesondere durch Nietpressen, miteinander verpresst. Da im Bereich der Halteelemente sich die Segmentleisten von zwei verschiedenen Deckelsegmenten überlappen können, ist es besonders einfach möglich durch ein Verpressen, insbesondere Verstemmen, der Halteelemente die Deckelsegmente fest miteinander zu verbinden.

Besonders bevorzugt bilden die erste Segmentleiste und die zweite Segmentleiste eine gemeinsame Anlagefläche für einen Schraubenkopf einer Schraube aus. Der Schraubenkopf kann in einer Ebene sowohl an der ersten Segmentleiste als auch an der zweiten Segmentleiste anliegen und dadurch über die jeweiligen Segmentleisten auf zwei Deckelsegmenten gleichzeitig eine Haltekraft ausüben. Insbesondere ist eine Möglichkeit zum Anschrauben mit Gegenkraft gegeben. Dadurch lassen sich die Werkzeug- und Fertigungskosten bei der Serienproduktion des Kupplungsdeckels reduzieren.

Die Erfindung betrifft ferner eine Reibungskupplung, insbesondere für einen Antriebsstrang eines Kraftfahrzeugs, mit einer Gegenplatte, einer in axialer Richtung bewegbaren Anpressplatte zum Verpressen einer Kupplungsscheibe zwischen der Anpressplatte und der Gegenplatte und einem direkt oder indirekt mit der Gegenplatte verbundenen Kupplungsdeckel, der wie vorstehend beschrieben aus- und weitergebildet sein kann. Die Reibungskupplung kann kostengünstig hergestellt sein.

Insbesondere ist der Kupplungsdeckel mit der Gegenplatte mit Hilfe einer Schraube verschraubt, wobei insbesondere die Anzahl der für die Verschraubung des Kupplungsdeckels mit der Gegenplatte verwendeten Schrauben der Anzahl der Deckelsegmente entspricht. Dadurch kann jeder ausgebildete Befestigungstunnel für eine Befestigung des Kupplungsdeckels mit der Gegenplatte genutzt werden. Alternativ ist es auch möglich nur jeden zweiten Befestigungstunnel für die Befestigung zu nutzen und trotzdem auf jedes Deckelsegment über die Schraube eine Haltekraft aufzuprägen.

Vorzugsweise ist der Kupplungsdeckel ausschließlich mit Hilfe der Schrauben mit der Anpressplatte verbunden. Weiter Befestigungsmaßnahmen, beispielsweise Schweißverbindungen, können vermieden werden, so dass die Herstellung der Reibungskupplung entsprechend kostengünstig erfolgen kann. Ferner kann eine Beschädigung des Kupplungsdeckels und/oder der Gegenplatte durch einen zu hohen Wärmeeintrag vermieden werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische perspektivische Ansicht eines Kupplungsdeckels und
- Fig. 2:: eine schematische perspektivische Ansicht einer Reibungskupplung mit einem alternativen Kupplungsdeckel.

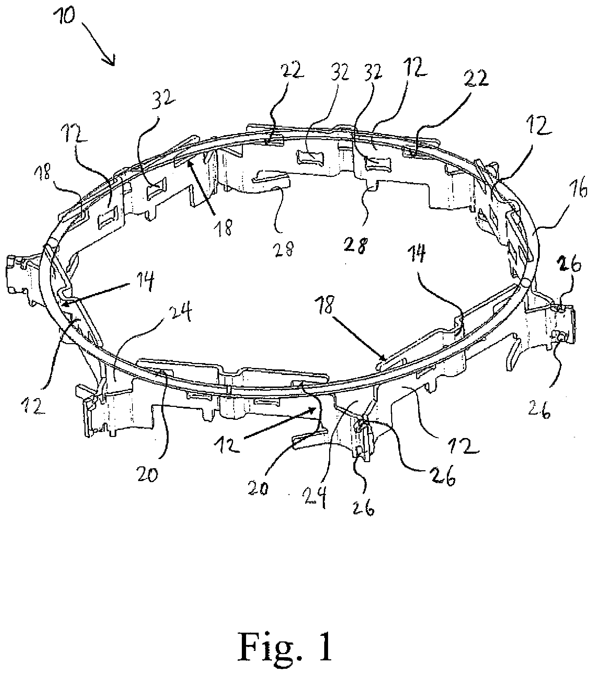

Der in Fig. 1 dargestellte Kupplungsdeckel 10 weist mehrere ringförmig miteinander verbundene Deckelsegmente 12 auf, die jeweils eine nach radial außen weisende Nase 14 aufweisen. Die Nasen 14 sind auf einer gemeinsamen Kreisbahn angeordnet. An den Nasen 14 kann ein Haltering 16 anliegen, der die Steifigkeit des Kupplungsdeckels 10 erhöht. Die Deckelsegmente 12 weisen jeweils zwei in Umfangsrichtung voneinander wegweisende Aufnahmeschlitze 18 auf, durch die der Haltering 16 hindurchgeführt ist. Die Aufnahmeschlitze 18 bilden jeweils in unterschiedliche axiale Richtungen wirkende erste Axialanschläge 20 und zweite Axialanschlage 22 für den Haltering 16 aus, wodurch sich die Verwindungssteifigkeit der Deckelsegmente 12 erhöht. Zwischen benachbarten Deckelsegmenten 12 ist auf axialer Höhe des Halterings 16 eine Aussparung 24 ausgebildet, die es erleichtert den Haltering 16 auf die Deckelsegmente 12 aufzusetzen. Im dargestellten Ausführungsbeispiel sind die Deckelsegmente 12 über umgebogene Biegeansätze 26 formschlüssig miteinander verbunden, wobei die umgebogenen Biegeansätze 26 noch eine begrenzte gelenkige Bewegbarkeit der Deckelsegmente 12 relativ zueinander zulassen können. Die Deckelsegmente 12 können ferner Führungselemente 28 zur axialen Führung einer Anpressplatte 30 aufweisen. Darüber hinaus ist es möglich, dass die Deckelsegmente 12 eine oder mehrere Durchgangsöffnungen 32 zur Aufnahme eines Betätigungselements 34 zum axialen Bewegen der Anpressplatte 30 aufweisen.

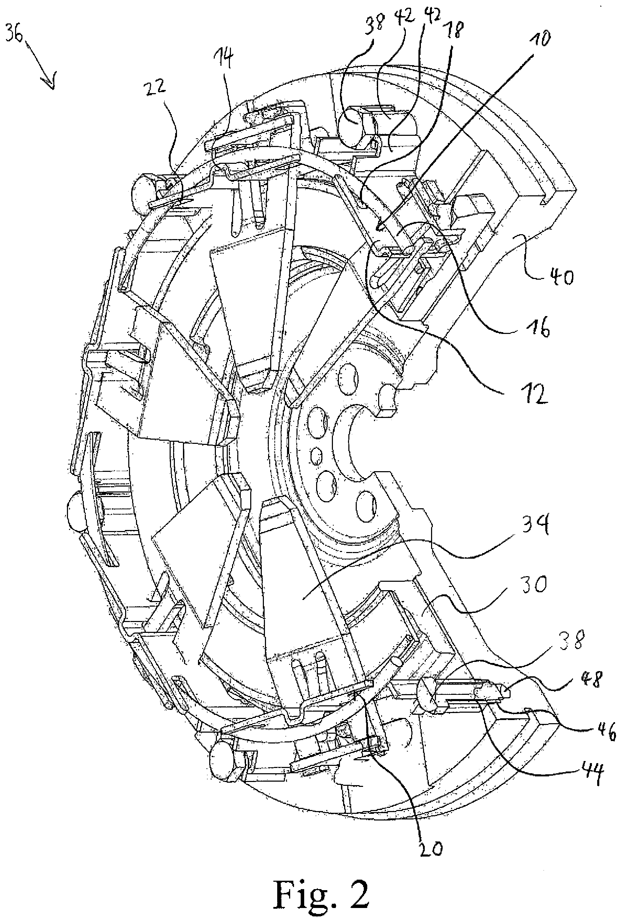

Bei der in Fig. 2 dargestellten Reibungskupplung 36 ist der Kupplungsdeckel 10 mit Hilfe von Schrauben 38 mit einer Gegenplatte 40 verschraubt. Hierzu weisen die Deckelsegmente 12 in Umfangsrichtung abstehende Segmentleisten 42 auf, die sich im zusammengesetzten Zustand der Deckelsegmente 12 zu einem Befestigungstunnel 44 ergänzen. Die Schraube 38 ist durch den Befestigungstunnel 44 mit Spiel hindurchgeführt und mit einem in der Gegenplatte 40 ausgebildeten korrespondierenden Innengewinde 46, das in einer Sacklochbohrung 48 vorgesehen ist, verschraubt. Mit Hilfe der Schrauben 38 ist der Kupplungsdeckel 10 zwischen den Schrauben 38 und der Gegenplatte 40 verklemmt, wobei die Schrauben 38 zusätzlich den Kupplungsdeckel 10 versteifen und ein übermäßiges Aufweiten des Kupplungsdeckels 10 unter Fliehkrafteinfluss vermeiden.

### Bezugszeichenliste

- 10: Kupplungsdeckel
- 12: Deckelsegment
- 14: Nase
- 16: Haltering
- 18: Aufnahmeschlitz
- 20: erster Axialanschlag
- 22: zweiter Axialanschlag
- 24: Aussparung
- 26: Biegeansatz
- 28: Führungselement
- 30: Anpressplatte
- 32: Durchgangsöffnung
- 34: Betätigungselement
- 36: Reibungskupplung
- 38: Schraube
- 40: Gegenplatte
- 42: Segmentleiste
- 44: Befestigungstunnel
- 46: Innengewinde
- 48: Sacklochbohrung

## Patentansprüche

1. Kupplungsdeckel für eine Reibungskupplung (36), insbesondere für einen Antriebsstrang eines Kraftfahrzeugs, mit
mehreren ringförmig miteinander verbundenen Deckelsegmenten (12) und
einem radial außen an den Deckelsegmenten (12) anliegbaren Haltering (16), **dadurch gekennzeichnet, dass** das jeweilige Deckelsegment (12) eine nach radial außen weisende Nase (14) zur radialen Anlage an dem Haltering (16) aufweist.

2. Kupplungsdeckel nach Anspruch 1, **dadurch gekennzeichnet, dass** das Deckelsegment (12) einen ersten Axialanschlag (20) zur axialen Anlage an dem Haltering (16) in einer ersten axialen Richtung und einen zweiten Axialanschlag (22) zur axialen Anlage an dem Haltering (16) in einer der ersten axialen Richtung entgegengesetzten zweiten axialen Richtung aufweist.

3. Kupplungsdeckel nach Anspruch 2, **dadurch gekennzeichnet, dass** das Deckelsegment (12) einen nach radial außen geöffneten Aufnahmeschlitz (18) zur Aufnahme des Halterings (16) aufweist, wobei der Aufnahmeschlitz (18) den ersten Axialanschlag (20) und den zweiten Axialanschlag (22) ausbildet, wobei insbesondere der Aufnahmeschlitz (18) im Wesentlichen in tangentialer Richtung ausgerichtet ist.

4. Kupplungsdeckel nach Anspruch 3, **dadurch gekennzeichnet, dass** das Deckelsegment (12) zwei in Umfangsrichtung entgegengesetzte Aufnahmeschlitze (18) aufweist.

5. Kupplungsdeckel nach einem der Ansprüche 1 bis 4, **dadurch gekennzeichnet, dass** das Deckelsegment (12) ein Führungselement (28) zur axialen Führung einer axial bewegbaren Anpressplatte (30) aufweist.

6. Kupplungsdeckel nach einem der Ansprüche 1 bis 5, **dadurch gekennzeichnet, dass** die Deckelsegmente (12) begrenzt gelenkig miteinander verbunden sind, wobei die Deckelsegmente (12) insbesondere formschlüssig mit Spiel miteinander verbunden sind.

7. Kupplungsdeckel nach einem der Ansprüche 1 bis 6, **dadurch gekennzeichnet, dass** der Haltering (16) mit einer Vorspannung in radialer Richtung an den Deckelsegmenten (12) anliegt.

8. Kupplungsdeckel nach einem der Ansprüche 1 bis 7, **dadurch gekennzeichnet, dass** zwischen zwei in Umfangsrichtung benachbarten Deckelsegmenten (12) auf einer axialen Höhe, auf welcher der Haltering (16) angeordnet ist, eine in axialer Richtung geöffnete Aussparung (24) ausgebildet ist.

9. Reibungskupplung, insbesondere für einen Antriebsstrang eines Kraftfahrzeugs, mit einer Gegenplatte (40), einer in axialer Richtung bewegbaren Anpressplatte (30) zum Verpressen einer Kupplungsscheibe zwischen der Anpressplatte (30) und der Gegenplatte (40) und einem direkt oder indirekt mit der Gegenplatte (40) verbundenen Kupplungsdeckel (10) nach einem der Ansprüche 1 bis 8.

## Claims

1. Clutch cover for a friction clutch (36), in particular for a drive train of a motor vehicle, having a plurality of cover segments (12) which are connected to one another in an annular manner and a securing ring (16) which can bear against the cover segments (12) radially on the outside, **characterized in that** the respective cover segment (12) has a radially outwardly pointing lug (14) for bearing radially against the securing ring (16).

2. Clutch cover according to Claim 1, **characterized in that** the cover segment (12) has a first axial stop (20) for bearing axially against the securing ring (16) in a first axial direction and a second axial stop (22) for bearing axially against the securing ring (16) in a second axial direction which is opposed to the first axial direction.

3. Clutch cover according to Claim 2, **characterized in that** the cover segment (12) has a receiving slot (18) which is open radially on the outside for receiving the securing ring (16), the receiving slot (18) forming the first axial stop (20) and the second axial stop (22), the receiving slot (18) being oriented, in particular, substantially in the tangential direction.

4. Clutch cover according to Claim 3, **characterized in that** the cover segment (12) has two opposite receiving slots (18) in the circumferential direction.

5. Clutch cover according to one of Claims 1 to 4, **characterized in that** the cover segment (12) has a guide element (28) for axially guiding an axially movable pressure plate (30).

6. Clutch cover according to one of Claims 1 to 5, **characterized in that** the cover segments (12) are connected to one another in a manner which is articulated to a limited extent, the cover segments (12) being connected to one another, in particular, in a positively locking manner with play.

7. Clutch cover according to one of Claims 1 to 6, **characterized in that** the securing ring (16) bears against the cover segments (12) with a prestress in the radial direction.

8. Clutch cover according to one of Claims 1 to 7, **characterized in that** a cut-out (24) which is open in the axial direction is configured at an axial height, on which the securing ring (16) is arranged, between two cover segments (12) which are adjacent in the circumferential direction.

9. Friction clutch, in particular for a drive train of a motor vehicle, having a counterplate (40), a pressure plate (30) which can be moved in the axial direction for pressing a clutch plate between the pressure plate (30) and the counterplate (40), and a clutch cover (10) according to one of Claims 1 to 8 which is connected directly or indirectly to the counterplate (40).

## Revendications

1. Couvercle d'embrayage pour un embrayage à friction (36), en particulier pour une chaîne cinématique d'un véhicule automobile, comprenant plusieurs segments de couvercle (12) connectés les uns aux autres sous forme annulaire et une bague de retenue (16) pouvant s'appliquer radialement à l'extérieur contre les segments de couvercle (12), **caractérisé en ce que** le segment de couvercle respectif (12) présente un nez (14) tourné radialement vers l'extérieur destiné à s'appliquer radialement contre la bague de retenue (16).

2. Couvercle d'embrayage selon la revendication 1, **caractérisé en ce que** le segment de couvercle (12) présente une première butée axiale (20) pour l'appui.axial contre la bague de retenue (16) dans une première direction axiale et une deuxième butée axiale (22) pour l'appui axial contre la bague de retenue (16) dans une deuxième direction axiale opposée à la première direction axiale.

3. Couvercle d'embrayage selon la revendication 2, **caractérisé en ce que** le segment de couvercle (12) présente une fente de réception (18) ouverte radialement vers l'extérieur pour recevoir la bague de retenue (16), la fente de réception (18) constituant la première butée axiale (20) et la deuxième butée axiale (22), la fente de réception (18) étant notamment orientée essentiellement dans la direction tangentielle.

4. Couvercle d'embrayage selon la revendication 3, **caractérisé en ce que** le segment de couvercle (12) présente deux fentes de réception (18) opposées dans la direction périphérique.

5. Couvercle d'embrayage selon l'une quelconque des revendications 1 à 4, **caractérisé en ce que** le segment de couvercle (12) présente un élément de guidage (28) pour le guidage axial d'une plaque de pressage (30) déplaçable axialement.

6. Couvercle d'embrayage selon l'une quelconque des revendications 1 à 5, **caractérisé en ce que** les segments de couvercle (12) sont connectés les uns aux autres de manière articulée dans une mesure limitée, les segments de couvercle (12) étant notamment connectés les uns aux autres par engagement par correspondance de formes avec jeu.

7. Couvercle d'embrayage selon l'une quelconque des revendications 1 à 6, **caractérisé en ce que** la bague de retenue (16) s'applique avec précontrainte dans la direction radiale contre les segments de couvercle (12).

8. Couvercle d'embrayage selon l'une quelconque des revendications 1 à 7, **caractérisé en ce qu'**entre deux segments de couvercle (12) adjacents dans la direction périphérique, à une hauteur axiale à laquelle est disposée la bague de retenue (16), est réalisé un évidement (24) ouvert dans la direction axiale.

9. Embrayage à friction, en particulier pour une chaîne cinématique d'un véhicule automobile, comprenant une plaque conjuguée (40), une plaque de pressage (30) déplaçable dans la direction axiale pour presser un disque d'embrayage entre la plaque de pressage (30) et la plaque conjuguée (40) et un couvercle d'embrayage (10) selon l'une quelconque des revendications 1 à 8, connecté directement ou indirectement à la plaque conjuguée (40).
